## Europäisches Patentamt

## European Patent Office

## Office européen des brevets

(19)

(11) Veröffentlichungsnummer: **0 171 446**
**B1**

(12) # EUROPÄISCHE PATENTSCHRIFT

(45) Veröffentlichungstag der Patentschrift:
25.11.87

(21) Anmeldenummer: 84109642.3

(22) Anmeldetag: 13.08.84

(51) Int. Cl.⁴: **H 01 H 37/46,** H 01 R 39/42,
H 02 K 11/00

(54) Thermischer Überlastschutz für einen Kommutator- bzw. Schleifringmotor.

(43) Veröffentlichungstag der Anmeldung:
19.02.86 Patentblatt 86/8

(45) Bekanntmachung des Hinweises auf die Patenterteilung:
25.11.87 Patentblatt 87/48

(84) Benannte Vertragsstaaten:
DE FR GB IT

(56) Entgegenhaltungen:
DE-A-2 701 884
DE-A-2 754 939
DE-A-3 306 663
US-A-3 707 694

JOURNAL OF METALS, Band 32, Nr. 6, Juni 1980,
New York, USA; C.M. WAYMAN "Some
applications of Shape-Memory Alloys", Seiten 129-
137

(73) Patentinhaber: Siemens Aktiengesellschaft Berlin
und München, Wittelsbacherplatz 2, D-8000
München 2 (DE)

(72) Erfinder: Lindner, Adolf, Dipl.- Ing.,
Grasholzstrasse 13, D-8702 Rottendorf (DE)

**Beschreibung**

Die Erfindung bezieht sich auf einen thermischen Überlastschutz für einen Kommutator- bzw. Schleifringmotor gemäß Oberbegriff des Anspruchs 1; ein derartiger thermischer Überlastschutz ist durch die DE-A1-33 06 663 bekannt.

Bei der bekannten, insbesondere zur Temperaturüberwachung eines Hammerbürstenhalters eines Elektromotors vorgesehenen Vorrichtung ist in eine seitliche taschenförmige Aufnahme des Bürstentragarms eines Hammerbürstenhalters jeweils ein Thermoschalter mit einem Bimetall- oder Halbleiterelement eingelassen, durch den bei zu starker Erwärmung und entsprechender Überschreitung einer festgelegten Temperatur der Motor durch elektrische Unterbrechung der Stromzuführung abgeschaltet wird.

Gemäß Aufgabe der vorliegenden Erfindung soll ein mit gegenüber der zuvor beschriebenen bekannten Vorrichtung zur Temperaturüberwachung einfach fertig- und montierbarer und dabei durch Einhaltung eines definierten Abschaltpunktes bei Erreichen bzw. Überschreiten eines vorgegebenen Temperatur-Sollwertes eine hohe Betriebssicherheit gewährleistender Überlastschutz geschaffen werden.

Die Lösung dieser Aufgabe ist erfindungsgemäß bei einem thermischen Überlastschutz der eingangs genannten Art durch die Lehre des Anspruchs 1 möglich; vorteilhafte Ausgestaltungen dieser Erfindung sind jeweils Gegenstand der abhängigen Ansprüche. Mechanismus und Anwendungen des sogenannten Formgedächtniseffektes sind aus der Literatur (z. B. Zeitschrift "Material und Technik", 1978, Nr. 2, S.59-65) bekannt. Formgedächtnislegierungen sind solche Materialien, die nach einer plastischen Verformung bei niedriger Temperatur wieder zu ihrer ursprünglichen Gestalt zurückkehren, wenn sie über eine kritische Temperatur erwärmt werden ("Memory-Effekt"). Im einzelnen werden Gedächtnis-Elemente sowohl mit einem sogenannten Einwegeffekt als auch solche mit einem sogenannten Zweiwegeeffekt beschrieben; beim Einwegeffekt wird die ursprüngliche Form nur einmal beim Erwärmen wieder angenommen, beim Zweiwegeeffekt liegt ein reversibles temperaturabhängiges Formänderungsverhalten vor, bei dem durch den Erwärmungsvorgang nicht die gesamte Verformung rückgängig gemacht wird und bei dem beim anschließenden Abkühlen wieder eine Formänderung in der Richtung der ursprünglichen Verformung erzielbar ist. Sowohl der Einweg- als auch der Zweiwegeeffekt sind je für sich beliebig wiederholbar.

Durch die erfindungsgemäße Ausbildung eines Bürstenhalters ist es möglich, ohne zusätzliche kraftverstärkende Mittel die Bürsten selbst von der Schleiffläche des Kommutators bzw. des Schleifrings plötzlich und mit großer Kraft abzuheben und damit eine Unterbrechung des Stromkreises bzw. Abschaltung des vor einer übermäßigen Erwärmung zu schützenden Motors sicher zu gewährleisten. Der Aufwand für einen derartigen Überlastschutz läßt sich für ein Hammer-Bürstenhaltersystem eines Kommutator- bzw. Schleifringmotors dadurch weiter vermindern, daß eine Formgedächtnislegierung mit Zweiwegeeffekt vorgesehen ist. Gesonderter Konstruktions-, Fertigungs- sowie Montageaufwand für zusätzliche Bimetall- oder Halbleiter-Temperaturschalter und deren mechanische Halterung und elektrische Kontaktierung erübrigen sich dabei.

Um die Menge der für die Schaltelemente benötigten Speziallegierung möglichst gering zu halten, ist nach einer weiteren Ausgestaltung der Erfindung vorgesehen, daß das Hebelelement einen separaten Teil des Bürstentragarms bildet, wobei zweckmäßigerweise das Hebelelement aus einer Formgedächtnislegierung selbst jeweils nur einen ersten Teil des Bürstentragarms bildet, der in der Bürstentragplatte fest gelagert ist, und der verbleibende Teil des Bürstentragarms aus einem, an den ersten Teil separat angesetzten elastischen Federelement besteht, das sich über die an seinem freien Ende gehaltene Bürste an die Schleiffläche des Kommutators bzw. des Schleifrings andrückt.

Zur fertigungs- und montagetechnischen Anwendung der erfindungsgemäßen Lehre bei einem Elektromotor mit einem Köcher-Bürstenhaltersystem mit in einem Köcher im wesentlichen radial zum Kommutator geführten und durch eine Feder gegen dessen Schleiffläche angedrückten Bürsten ist nach einer Ausgestaltung der Erfindung vorgesehen, daß das Hebelelement mit seinem einen Ende an der Außenwand des Köchers befestigt und mit seinem anderen Ende mittel- oder unmittelbar derart auf die Bürste zugebogen ist, daß bei Überschreiten des Temperatur-Sollwertes das freie Ende kraft- und/oder formschlüssig in Gegenrichtung zur Andruckkraft der Feder mit der Bürste in Abhebeverbindung von der Schleiffläche des Kommutators gestellt ist. Zwei spezielle Ausgestaltungen der Erfindungsanwendung für ein Köcher-Bürstenhaltersystem sind dadurch gekennzeichnet, daß entweder das Hebelelement durch einen Torsions-Schwenk-Ausschlag oder durch einen Knick-Streck-Ausschlag mit der Bürste in Abhebeverbindung von der Schleiffläche des Kommutators gestellt ist.

Die Erfindung sowie weitere vorteilhafte Ausgestaltungen der Erfindung werden im folgenden anhand schematischer Darstellung von vier Ausführungsbespielen in der Zeichnung näher erläutert. Darin zeigen:

Fig. 1 eine axiale Draufsicht auf ein erstes Hammer-Bürstenhaltersystem mit einteiligen Bürstentragarmen,

Fig. 2 eine axiale Draufsicht auf ein zweites Hammer-Bürstenhaltersystem mit mehrteiligen Bürstentragarmen,

Fig. 3 eine axiale Draufsicht auf ein erstes Köcher-Bürstenhaltersystem mit einem durch einen Torsions-Schwenk-Ausschlag die Bürste abhebenden Hebelelement,

Fig. 4 eine axiale Draufsicht auf ein zweites Köcher-Bürstenhaltersystem mit einem durch einen Knick-Streck-Ausschlag die Bürste abhebenden Hebelelement.

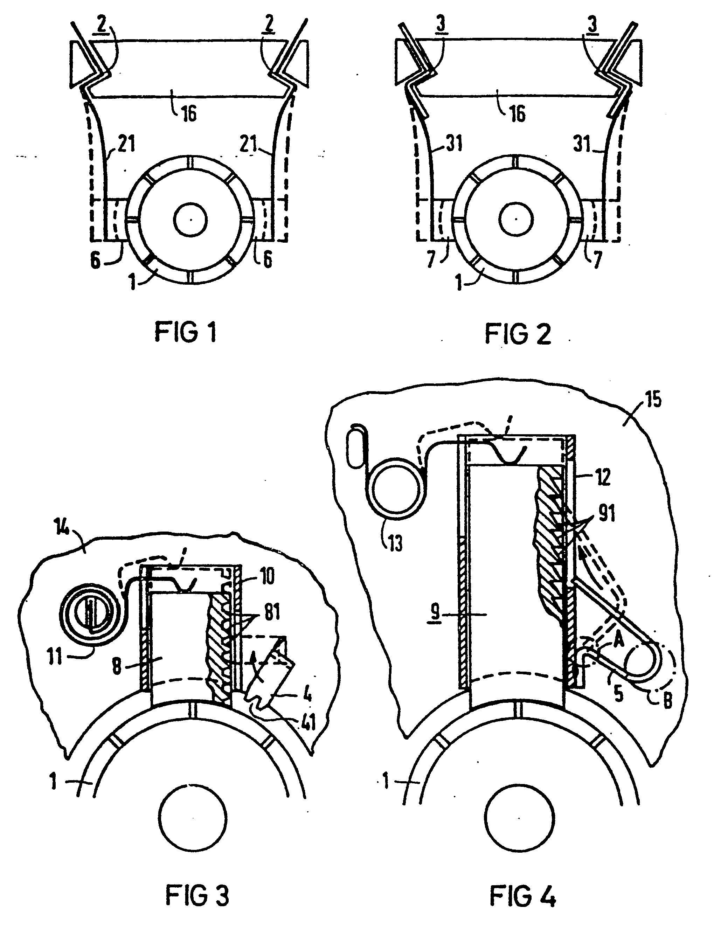

Fig. 1 zeigt zwei an einer schematisch dargestellten Bürstentragplatte 16 fest gelagerte einstückige Bürstentragarme eines Hammer-Bürstenhaltersystems. Die einstückigen Bürstentragarme aus einer Formgedächtnislegierung mit Zweiwegeeffekt sind in ihrem oberen Teil jeweils als eigentliches Hebelelement 2 (Memory-Element) geformt und in ihrem übrigen Teil als Federelement 21 ausgebildet, derart daß im normalen Betriebszustand die an den unteren freien Enden der Bürstentragarme jeweils befestigten Bürsten 6 auf die Schleiffläche des Kommutators 1 gedrückt sind. Die Hebelelemente 2 aus einer Formgedächtnislegierung mit Zweiwegeeffekt sind derart geschaffen, daß sie bei Erreichen bzw. Überschreiten des Temperatur-Sollwertes, z. B. einer festgelegten Temperatur von 160° C, einen relativ großen und temperaturunabhängigen Hebelweg praktisch schlagartig innerhalb eines Temperaturbereiches von 10 bis 15°C zurücklegen, durch den infolge des großen Arbeitsvermögens eines Hebelelementes die Bürsten 6 in die in gestrichelter Kontur gekennzeichnete Stellung bewegt und dadurch schlagartig von der Schleiffläche des Kommutators abgehoben werden, wodurch die Stromzufuhr zum Kommutator unterbrochen wird. Die Bürsten 6 verbleiben solange in der abgehobenen Lage, bis die Temperatur des Hebelelementes aus einer Formgedächtnislegierung wieder unter den zulässigen Temperatur-Sollwert abgekühlt ist. Die Bürstentragarme nehmen dann schlagartig wieder ihre frühere Stellung ein und stellen die Stromzufuhr zum Kommutator wieder her.

In Fig. 2 ist eine Konstruktionsvariante angedeutet, bei der das Hebelelement 3 aus einer Formgedächtnislegierung mit Zweiwegeeffekt jeweils als separater Teil jedes Bürstentragarms ausgebildet ist, an den ein die Bürste 7 an seinem unteren freien Ende aufnehmendes Federelement 31 gesondert befestigt ist. Auch in Fig. 2 ist wiederum in gestrichelter Kontur die Lage dargestellt, in die der Bürstentragarm bei Erreichen bzw. Überschreiten des Temperatur-Sollwertes schlagartig durch das Hebelelement aus einer Formgedächtnislegierung unter gleichzeitiger Trennung der Stromzuführung zum Kommutator 1 bewegt wird.

Fig. 3 zeigt als weiteres Ausführungsbeispiel ein Köcher-Bürstenhaltersystem mit einem an einer Bürstentragplatte 14 befestigten Köcher 10, in dem eine Bürste 8 geführt und durch eine auf ihrem oberen Kopfende aufliegende Bürstenandruckfeder 11 gegen die Schleiffläche eines Kommutators 1 gedrückt wird. Auf der rechten Seite ist die Bürste 8 mit einem eingeprägten Zahn-Raster 81 derart versehen, daß ein Hebelelement 4 aus einer Formgedächtnislegierung mit Zweiwegeeffekt bei Erreichen bzw. Überschreiten des Temperatur-Sollwertes durch einen Torsions-Schwenk-Ausschlag von der mit ausgezogener Kontur gezeichneten Stellung in die mit gestrichelter Kontur gezeichnete Stellung schlagartig bewegt wird und dabei mit einer korrespondierenden Zahnung 41 in die Zähne des Zahn-Rasters der Bürste 8 eingreift, die Bürste in Gegenrichtung zur Andruckkraft der Bürstenandruckfeder 11 um ein geringes Stück in die gestrichelt gezeigte Lage anhebt und dabei ebenfalls die Stromzufuhr zwischen Bürste 8 und Kommutator 1 unterbricht.

Fig.4 zeigt die erfindungsgemäße Lehre in Anwendung auf ein weiteres Ausführungsbeispiel mit einem an einer Bürstentragplatte 15 befestigten Köcher-Bürstenhaltersystem. In diesem Fall wird bei Überschreiten des Temperatur-Sollwertes die in dem Köcher 12 geführte Bürste 9 durch das an dem dem Kommutator 1 zugewandten Ende der Außenwand des Köchers befestigte Hebelelement 5 durch einen Knick-Streck-Ausschlag seines anderen freien Endes von der Schleiffläche des Kommutators abgehoben; das gesamte Hebelelement ist dazu oberhalb seines Befestigungspunktes an der Außenwand des Köchers 12 zunächst in einem Bereich A, in dem es ausgesprochene Formgedächtniseigenschaft aufweist, von der Außenwand des Köchers weggebogen und anschließend in einem Bereich B, der vorzugsweise Federeigenschaft aufweist, mit seinem freien Ende gegen die Außenwand des Köchers 12 derart zurückgebogen, daß dieses freie Ende bei Erreichen bzw. Überschreiten des Temperatur-Sollwertes durch die Rückformung des Hebelelementes im Bereich B gegen die Bürste 9 angedrückt wird und mit einer entgegen der Andruckkraft der Bürstenandruckfeder 13 wirkenden Kraftkomponente die Bürste 9 von der Schleiffläche des Kommutators 1 abhebt. Zur besseren Griffigkeit zwischen dem gegen die Bürste 9 gedrückten Ende des Hebelelementes und der Bürste 9 ist diese - ähnlich wie beim Ausführungsbeispiel gemäß Fig.4 - zumindest im Bereich des angreifenden freien Endes mit einem, vorzugsweise eingeprägten, Zahn-Raster 91 versehen. Wie weiterhin aus Fig. 4 ersichtlich, weist der köcher 12 im Andruckbereich des freien Endes des Hebelelementes eine Öffnung auf, durch die das freie Ende des Hebelelementes bei einer Rückformbewegung des Hebelelementes wegen zu starker Erwärmung des Kommutatormotors durchführbar ist. Ist eine Gedächtnislegierung mit Zweiwegeeffekt vorgesehen, so wird das freie, die Bürste 9 von der Schleiffläche des Kommutators 1 abhebende Ende des Hebelelementes nach Rückgang der Erwärmung auf den Temperatur-Sollwert aus dem Zahn-Raster 91 zurückgezogen und die Bürste 9 freigegeben, die dann durch die Bürstenandruckfeder 13 wieder auf die Schleiffläche des Kommutators 1 aufgedrückt werden kann und die Stromzuführung zum Motor freigibt.

## Patentansprüche

1. Thermischer Überlastschutz für einen Kommutator- bzw. Schleifringmotor mit einer thermisch auslösbaren Schaltvorrichtung, durch die bei Überschreiten eines Temperatur-Sollwertes der Stromübergang zwischen dem Kommutator (1) bzw. dem Schleifring einerseits und den kontaktierenden Bürsten (6;7;8;9;) andererseits unterbrechbar ist, dadurch gekennzeichnet, daß als thermisch auslösbare Schaltvorrichtung jeweils ein bei Überschreiten des Temperatur-Sollwertes die Bürste (6 bzw.7 bzw.8 bzw.9) von dem Kommutator (1) bzw. dem Schleifring abhebendes Hebelelement (2 bzw.3 bzw.4 bzw.5) aus einer Formgedächtnislegierung (Memory-Element) vorgesehen ist.

2. Thermischer Überlastschutz nach Anspruch 1, dadurch gekennzeichnet, daß eine Formgedächtnislegierung mit Zweiwegeeffekt vorgesehen ist.

3. Thermischer Überlastschutz nach Anspruch 1 oder 2 für einen Kommutator- bzw. Schleifringmotor mit einem Hammer-Bürstenhaltersystem, dadurch gekennzeichnet, daß jeweils ein einstückiger Bürstentragarm aus einer Formgedächtnislegierung vorgesehen ist, dessen eines fest in einer Bürstentragplatte (16) gelagerte Ende als Hebelelement (2) geformt und dessen übriger Teil als Federelement (21) ausgebildet ist, das sich über die an seinem freien Ende gehaltene Bürste (6) an die Schleiffläche des Kommutators (1) bzw. des Schleifrings andrückt (Fig.1).

4. Thermischer Überlastschutz nach Anspruch 1 oder 2, dadurch gekennzeichnet, daß das Hebelelement (3) aus einer Formgedächtnislegierung einen separaten Teil des Bürstentragarms bildet.

5. Thermischer Überlastschutz nach Anspruch 3, dadurch gekennzeichnet, daß jeweils das Hebelelement (3) aus einer Formgedächtnislegierung selbst nur den einen Teil des Bürstentragarms bildet, der in der Bürstentragplatte (16) fest gelagert ist, und daß der verbleibende Teil des Bürstentragarms aus einem an den ersten Teil angesetzten elastischen Federelement (31) besteht, das sich über die an seinem freien Ende gehaltene Bürste (7) an die Schleiffläche des Kommutators (1) bzw. des Schleifrings andrückt (Fig.2).

6. Thermischer Überlastschutz nach Anspruch 1 mit einem Köcher-Bürstenhaltersystem mit in einem Köcher (10) im wesentlichen radial zum Kommutator (1) geführten und durch eine Feder (11;13) gegen dessen Schleiffläche angedrückten Bürste (8;9), dadurch gekennzeichnet, daß das Hebelelement (4 bzw.5) mit seinem einen Ende an der Außenwand des Köchers (10;12) befestigt und mit seinem anderen freien Ende mittel- oder unmittelbar derart auf die Bürste (8;9) zugebogen ist, daß bei Überschreiten des Temperatur-Sollwertes das freie Ende kraft- und/oder formschlüssig in Gegenrichtung zur Andruckkraft der Feder (11;13) mit der Bürste (8;9) in Abhebeverbindung von der Schleiffläche des Kommutators (1) gestellt ist.

7. Thermischer Überlastschutz nach Anspruch 6, dadurch gekennzeichnet, daß das Hebelelement (4) durch einen Torsions-Schwenk-Ausschlag mit der Bürste (8) in Abhebeverbindung von der Schleiffläche des Kommutators (1) gestellt ist (Fig.3).

8. Thermischer Überlastschutz nach Anspruch 6, dadurch gekennzeichnet, daß das Hebelelement (5) durch einen Knick-Streck-Ausschlag mit der Bürste (9) in Abhebeverbindung von der Schleiffläche des Kommutators (1) gestellt ist (Fig.4).

9. Thermischer Überlastschutz nach einem der Ansprüche 6 bis 8, dadurch gekennzeichnet, daß die Bürste (8 bzw.9) zumindest im Angriffsbereich des Hebelelementes (4 bzw.5) mit einem Zahn-Raster (81 bzw.91) versehen ist, zwischen dessen in Richtung der Bürstenlängsachse hintereinander angeordnete Zähne das freie Ende des Hebelelementes (4 bzw.5) bei Überschreiten des Temperatur-Sollwertes in Eingriff bringbar ist (Fig.3,4).

## Claims

1 Thermal overload protection for a commutator or slip-ring motor comprising a thermal cut-out switching device, by means of which, when a theoretical temperature value is exceeded, the passage of current between the commutator (1) or slip-ring, as the case may be, on the one hand, and the contact-making brushes (6, 7, 8, 9), on the other hand, can be interrupted, characterised in that a lever element (2, 3, 4, 5) made of an alloy exhibiting elastic memory (memory element) which lifts the brush (6, 7, 8, 9) from the commutator or slip-ring, as the case may be, when the theoretical value is exceeded, is provided as thermal cut-out switching device.

2. Thermal overload protection as claimed in Claim 1, characterised in that an elastic memory alloy having a two-way effect is provided.

3. Thermal overload protection as claimed in Claim 1 or 2 for a commutator or slip-ring motor with a hammer brush-holder system, characterised in that in each case, a one-piece brush-carrier arm made of an elastic memory alloy is provided, one end of which is firmly supported in a brush-carrier plate (16) and is formed as a lever element (2), and the other part of which is formed as a spring element (21), which presses through the brush (6) held at its free end, against the contact surface of the commutator (1) or the slip-ring, as the case may be (Fig. 1).

4. Thermal overload protection as claimed in Claim 1 or 2, characterised in that the lever element (3) made of an elastic memory alloy forms a separate part of the brush-carrier arm.

5. Thermal overload protection as claimed in Claim 3, characterised in that in each case, the lever element (3) made of an elastic memory alloy itself forms only one part of the brush-carrier arm which is firmly fixed in the brush-carrier plate; and that the remaining part of the brush-carrier arm consists of an elastic spring element (31) fixed to the first part and pressing against the contact surface of the commutator (1) or slip-ring, as the case may be, through the brush (7) carried at its free end (Fig. 2).

6. Thermal overload protection as claimed in Claim 1 with a tubular brush-holder system with brushes (8, 9) in a tubular casing (10) fed in an essentially radial direction with respect to the commutator (1) and pressed against its contact surface by means of a spring (11, 13), characterised in that the lever element (4 or 5) is fastened at one end to the outer wall of the tubular casing (10, 12) and is bent towards the brush (8, 9) at its free end, either directly or indirectly, in such a way that, when the theoretical temperature value is exceeded, the free end is brought by force-fitting and/or shape-locking into connection with the brush (8, 9) in the direction opposite to the pressure of the spring (11, 13) to lift the brush from the contact surface of the commutator (1).

7. Thermal overload protection as claimed in Claim 6, characterised in that the lever element (4) is brought into connection with the brush (8) to lift it from the contact surface of the commutator (1) by means of a torsional twist deflection (Fig. 3).

8. Thermal overload protection as claimed in Claim 6, characterised in that the lever element (5) is brought into connection with the brush (9) to lift it from the contact surface of the commutator (1) by means of a bend-stretch deflection (Fig. 4).

9. Thermal overload protection as claimed in one of Claims 6 to 8, characterised in that the brush (8, 9) is provided, at least in the area acted on by the lever element (4 or 5), with a tooth-grating (81, 91), the teeth of which are arranged one behind another in the direction of the longitudinal axis of the brush, and between which the free end of the lever element (4, 5) can be engaged when the theoretical temperature value is exceeded (Fig. 3, 4).

**Revendications**

1. Dispositif de protection thermique contre les surcharges pour un moteur à collecteur ou un moteur à bagues collectives comportant un dispositif de commutation à déclenchement thermique, à l'aide duquel, lors du dépassement d'une valeur de consigne de la température, le passage du courant entre le collecteur (1) ou les bagues d'une part et les balais de contact (6;7;8;9) d'autre part peut être interrompu, caractérisé par le fait qu'il est prévu, comme dispositif de commutation à déclenchement thermique, un élément respectif formant levier (2 ou 3 ou 4 ou 5) qui est constitué par un alliage conservant la mémoire de forme (élément à mémoire) et qui, lors du dépassement de la valeur de consigne de la température, écarte les balais (6 ou 7 ou 8 ou 9) du collecteur (1) ou des bagues.

2. Dispositif de protection thermique contre les surcharges suivant la revendication 1, caractérisé par le fait qu'il est prévu un alliage conservant la mémoire de forme, à effet bidirectionnel.

3. Dispositif de protection thermique contre les surcharges suivant la revendication 1 ou 2, pour un moteur à collecteur ou à bagues collectives comportant un système porte-balais en forme de marteau, caractérisé par le fait qu'il est prévu respectivement un bras monobloc de support des balais, constitué en un alliage conservant la mémoire de forme et dont une extrémité, qui est montée fixe dans une plague (16) de support des balais, est agencée sous la forme d'un élément formant levier (2) et dont l'autre partie est réalisée sous la forme d'un élément de ressort (21), qui s'appuie, par l'intermédiaire des balais (6) montés sur son extrémité libre, sur la surface de frottement du collecteur (1) ou des bagues (figure 1).

4. Dispositif de protection thermique contre les surcharges suivant les revendications 1 ou 2, caractérisé par le fait que l'élément formant levier (3) constitué par un alliage conservant la mémoire de forme, constitue une partie séparée du bras de support des balais.

5. Dispositif de protection thermique contre les surcharges suivant la revendication 3, caractérisé par le fait que l'élément formant levier (3) constitué par un alliage conservant la mémoire de forme constitue lui-même seulement une partie du bras de support des balais, qui est montée fixe dans la plaque (16) de support des balais, et que la partie restante du bras de support des balais est constituée par un élément élastigue de ressort (31) monté sur la première partie et qui s'appuie, par l'intermédiaire du balai (7) fixé sur son extrémité libre, contre la surface de frottement du collecteur (1) ou de la bague (figure 2).

6. Dispositif de protection thermique contre les surcharges suivant la revendication 1, comportant un système formant porte-balais tubulaire possédant des balais qui sont guidés essentiellement radialement par rapport au collecteur (1) dans un logement tubulaire et sont appliqués par un ressort (11;13) contre la surface de frottement (8;9) du collecteur, caractérisé par le fait que l'élément formant levier (4 ou 5) est fixé, par l'une de ses extrémités, sur la paroi extérieure du logement tubulaire (10;12) et est incurvé, au niveau de son autre extrémité, indirectement ou directement vers le balai (8;9) de telle sorte que, lors d'un dépassement de la valeur de consigne de la température l'extrémité libre est reliée, selon une liaison à transmission de force et/ou une liaison par formes complémentaires et en sens opposé de la force de serrage du ressort (11;13), au balai (8;9) de manière à l'écarter de la surface de glissement du collecteur (1).

7. Dispositif de protection thermique contre les surcharges suivant la revendication 6, caractérisé par le fait que l'élément formant levier (4) est relié sous l'effet d'une déviation de pivotement torsion, au balai (8) de manière à écarter ce dernier de la surface de frottement du collecteur (1).

8. Dispositif de protection thermique contre les surcharges suivant la revendication 6, caractérisé par le fait que l'élément formant levier (5) est relié, sous l'effet d'une déviation avec extension et pliage, au balai (9) de manière à écarter ce dernier de la surface du collecteur (1) (figure 4).

9. Dispositif de protection thermique contre les surcharges suivant l'une des revendications 6 à 8, caractérisé par le fait que la brosse (8 ou 9) comporte, au moins dans la zone d'attaque de l'élément formant levier (4 ou 5), un réseau (81 ou 91) de dents, et que l'extrémité libre de l'élément formant levier (4 ou 5) peut être amenée à s'engager entre les dents, disposées les unes derrière les autres dans la direction de l'axe longitudinal du balai, du réseau de dents, lors d'un dépassement de la valeur de consigne de la température (figures 3,4).

FIG 1

FIG 2

FIG 3

FIG 4